# FASCICULE DE BREVET EUROPEEN

(11) **EP 3 931 056 B1**
(45) Date de publication et mention de la délivrance du brevet: **16.11.2022**
(21) Numéro de dépôt: 20709282.6
(22) Date de dépôt: 05.02.2020
(51) Int. Cl.: B60W 30/14, B60W 30/18, B60W 30/045, B60W 50/00

(54) **RÉGULATION DE LA VITESSE D'UN VÉHICULE LORS D'UN DÉPASSEMENT EN VIRAGE**
REGELUNG DER GESCHWINDIGKEIT EINES FAHRZEUGS BEIM ÜBERHOLEN IN EINER BIEGUNG
REGULATION OF THE SPEED OF A VEHICLE WHEN OVERTAKING ON A BEND

(30) Priorité: 28.02.2019 FR 1902090
(43) Date de publication de la demande: 05.01.2022
(73) Titulaire: PSA Automobiles SA, 78300 Poissy (FR)
(72) Inventeur: BELLE, Claire, 25230 SELONCOURT (FR); FAVREAU, Eric, 68290 MASEVAUX (FR)
(86) Numéro de dépôt international: PCT/FR2020/050199
(87) Numéro de publication internationale: WO 2020/174141

(56) Documents cités:
- EP-A1- 1 034 963
- WO-A1-2018/047291
- US-A1- 2005 240 335
- US-A1- 2018 362 001

## Description

### Domaine technique de l'invention

L'invention concerne les véhicules à conduite au moins partiellement automatisée (ou autonome) et éventuellement de type automobile, et plus précisément la régulation de la vitesse de tels véhicules.

### Etat de la technique

Dans ce qui suit on considère qu'un véhicule terrestre est à conduite au moins partiellement automatisée (ou autonome) lorsqu'il peut être conduit sur une route de façon automatisée (partielle ou totale (sans intervention de son conducteur)) pendant une phase de conduite automatisée, ou de façon manuelle (et donc avec intervention de son conducteur sur le volant (ou le guidon) et/ou les pédales (ou leviers) pendant une phase de conduite manuelle. Par exemple, la conduite automatisée (ou autonome) d'un véhicule (à conduite au moins partiellement automatisée) peut consister à diriger partiellement ou totalement ce véhicule ou à apporter tout type d'aide à une personne physique conduisant ce véhicule. Cela couvre donc toute conduite automatisée (ou autonome), du niveau 1 au niveau 5 dans le barème de l'OICA (Organisation International des Constructeurs Automobiles).

Par ailleurs, on entend ici par « véhicule terrestre » tout type de véhicule pouvant circuler sur une route, et notamment un véhicule automobile, un véhicule utilitaire, un cyclomoteur, une motocyclette, un minibus, un car, un robot de stockage dans un entrepôt, ou un engin de voirie.

Certains véhicules à conduite au moins partiellement automatisée (ou autonome) comprennent un dispositif de régulation chargé de réguler leur vitesse en fonction d'une consigne de vitesse, éventuellement choisie par leur conducteur. Certains de ces dispositifs de régulation comprennent une option permettant d'adapter la vitesse de leur véhicule en fonction du rayon de courbure de la future portion qu'il s'apprête à emprunter sur la voie de circulation sur laquelle il circule. Une telle option est souvent appelée CSA (« Curve Speed Adaptation » - adaptation de vitesse en virage). Des exemples de tels systèmes sont décrits dans US 2018/362001 A1, WO 2018/047291 A1, EP 1 034 963 A1.

En présence de cette option, chaque fois qu'un rayon de courbure de la future portion empruntée est représentatif d'un virage, on contrôle l'imposition à son véhicule d'une phase de décélération jusqu'à une vitesse de décélération (ou de passage en virage) choisie, puis d'une phase d'accélération jusqu'à obtention d'une vitesse qui est égale à la consigne de vitesse. L'accélération dans la phase d'accélération dépend du rayon de courbure de la portion de route située devant le véhicule. Elle peut donc être limitée ou non. Pour simplifier, l'option permet en cas de détection d'un prochain virage, de réduire temporairement la vitesse du véhicule afin de faciliter son passage dans ce virage et ainsi améliorer le confort des passagers.

Un inconvénient de ce type d'option réside dans la gestion des dépassements dans le cas d'une conduite autonome en virage (notamment sur autoroute ou voie rapide). Par exemple, une telle gestion s'avère problématique lorsqu'un premier véhicule qui est équipé de ce type d'option circule sur une première voie de circulation qui est adjacente à une seconde voie de circulation sur laquelle circule un second véhicule, et que ce premier véhicule est en train de dépasser ce second véhicule juste avant de parvenir dans ce virage. En effet, dans cette dernière situation, la vitesse de décélération (ou de passage en virage) choisie peut être inférieure à la vitesse en cours du second véhicule, et donc le premier véhicule se retrouve en plein virage avec une vitesse inférieure à celle du second véhicule, ce qui peut induire un ralentissement du flux de circulation qui peut paraître incompréhensible à l'un au moins des conducteurs des véhicules qui suivent le premier véhicule ralenti, voire peut s'avérer dangereux lorsque l'un de ces derniers conducteurs ne s'aperçoit pas du ralentissement ou décide de dépasser le premier véhicule par la seconde voie de circulation en suivant le second véhicule (ce qui est interdit par le code de la route).

L'invention a donc notamment pour but d'améliorer la situation.

### Présentation de l'invention

Elle propose notamment à cet effet un procédé, d'une part, destiné à réguler la vitesse d'un véhicule à conduite au moins partiellement automatisée et connaissant le rayon de courbure d'une future portion qu'il s'apprête à emprunter sur une première voie de circulation sur laquelle il circule et adjacente à une seconde voie de circulation, et, d'autre part, comprenant une étape dans laquelle, en cas de détection d'un rayon de courbure de la future portion représentatif d'un virage, on impose au premier véhicule une phase de décélération jusqu'à une première vitesse de décélération (ou de passage en virage) adaptée au rayon de courbure.

Ce procédé se caractérise par le fait que dans son étape, lorsque le premier véhicule est en train de dépasser un second véhicule circulant sur la seconde voie de circulation :
- on détermine une vitesse en cours du second véhicule, puis
- si la première vitesse de décélération est inférieure à cette vitesse en cours déterminée, on remplace la première vitesse de décélération par une seconde vitesse de décélération (ou de passage en virage) qui est supérieure à cette vitesse en cours déterminée.

La vitesse du premier véhicule demeurant dans le virage supérieure à celle du second véhicule qu'il est en train de dépasser (en dehors de situations exceptionnelles), on évite d'induire un ralentissement du flux de circulation et de tenter un conducteur d'un véhicule suivant le premier véhicule de dépasser ce dernier par la seconde voie de circulation en suivant le second véhicule.

Le procédé selon l'invention peut comporter d'autres caractéristiques qui peuvent être prises séparément ou en combinaison, et notamment :
- dans son étape on peut déterminer une vitesse de décélération maximale en fonction d'une première accélération transversale maximale que peut subir le premier véhicule dans le virage compte tenu de son rayon de courbure, et on peut déterminer une seconde vitesse de décélération inférieure ou égale à la vitesse de décélération maximale déterminée ;

+ dans son étape, lorsque la vitesse de décélération maximale déterminée est inférieure ou égale à la vitesse en cours du second véhicule, on peut imposer une seconde vitesse de décélération inférieure ou égale à cette vitesse de décélération maximale déterminée et donc inférieure ou égale à cette vitesse en cours ;
+ dans son étape on peut déterminer la vitesse de décélération maximale en fonction, en outre, d'une seconde accélération transversale maximale respectant un niveau de confort minimal de passager(s) du premier véhicule ;
+ dans son étape on peut déterminer la vitesse de décélération maximale en fonction, en outre, d'au moins un paramètre choisi parmi une consigne de vitesse pour la régulation de vitesse du premier véhicule, d'une limitation de vitesse imposée sur la première voie de circulation, d'une vitesse et/ou d'une accélération en cours du second véhicule, d'un nombre de véhicules précédant le second véhicule sur la seconde voie de circulation, d'une présence d'un autre véhicule suivant le premier véhicule sur la première voie de circulation, et d'une présence d'un autre véhicule suivi par le premier véhicule ou par le second véhicule ;
   - dans son étape on peut déterminer une seconde vitesse de décélération en fonction, en outre, d'au moins un paramètre choisi parmi une consigne de vitesse pour la régulation de vitesse du premier véhicule, d'une limitation de vitesse imposée sur la première voie de circulation, d'une vitesse et/ou d'une accélération en cours du second véhicule, d'un nombre de véhicules précédant le second véhicule sur la seconde voie de circulation, d'une présence d'un autre véhicule suivant le premier véhicule sur la première voie de circulation, et d'une présence d'un autre véhicule suivi par le premier véhicule ou par le second véhicule ;
   - dans son étape on peut ne pas procéder au remplacement de la première vitesse de décélération par la seconde vitesse de décélération lorsque les première et seconde voies de circulation ont des destinations différentes.

L'invention propose également un produit programme d'ordinateur comprenant un jeu d'instructions qui, lorsqu'il est exécuté par des moyens de traitement, est propre à mettre en œuvre un procédé de régulation de vitesse du type de celui présenté ci-avant pour réguler la vitesse d'un véhicule à conduite au moins partiellement automatisée et connaissant le rayon de courbure d'une future portion qu'il s'apprête à emprunter sur une première voie de circulation sur laquelle il circule et adjacente à une seconde voie de circulation.

L'invention propose également un dispositif de régulation de vitesse, d'une part, destiné à équiper un véhicule à conduite au moins partiellement automatisée et connaissant le rayon de courbure d'une future portion qu'il s'apprête à emprunter sur une première voie de circulation sur laquelle il circule et adjacente à une seconde voie de circulation, et, d'autre part, comprenant au moins un processeur et au moins une mémoire agencés pour effectuer, en cas de détection d'un rayon de courbure de la future portion représentatif d'un virage, les opérations consistant à imposer au premier véhicule une phase de décélération jusqu'à une première vitesse de décélération adaptée à ce rayon de courbure.

Ce dispositif de régulation de vitesse se caractérise par le fait que, lorsque le premier véhicule est en train de dépasser un second véhicule circulant sur la seconde voie de circulation, son processeur et sa mémoire sont agencés pour effectuer des opérations consistant à déterminer une vitesse en cours du second véhicule, puis, si la première vitesse de décélération est inférieure à cette vitesse en cours déterminée, à remplacer la première vitesse de décélération par une seconde vitesse de décélération qui est supérieure à la vitesse en cours déterminée.

L'invention propose également un véhicule, éventuellement de type automobile, à conduite au moins partiellement automatisée, connaissant le rayon de courbure d'une future portion qu'il s'apprête à emprunter sur une première voie de circulation sur laquelle il circule et adjacente à une seconde voie de circulation, et comprenant un dispositif de régulation de vitesse du type de celui présenté ci-avant.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement un véhicule situé sur l'une des deux voies de circulation d'une route et équipé d'un dispositif de régulation de vitesse selon l'invention,
[Fig. 2] illustre schématiquement un exemple d'algorithme mettant en œuvre un procédé de régulation de vitesse selon l'invention,
[Fig. 3] illustre schématiquement au sein d'un diagramme des première (C1), deuxième (C2) et troisième (C3) courbes d'évolution de la vitesse respectivement d'un premier véhicule équipé d'un dispositif de régulation de vitesse selon l'invention, d'un premier véhicule équipé d'un dispositif de régulation de vitesse de l'art antérieur et d'un second véhicule en cours de dépassement, en fonction de la distance, et
[Fig. 4] illustre schématiquement et fonctionnellement un exemple de réalisation d'un dispositif de régulation de vitesse selon l'invention.

### Description détaillée de l'invention

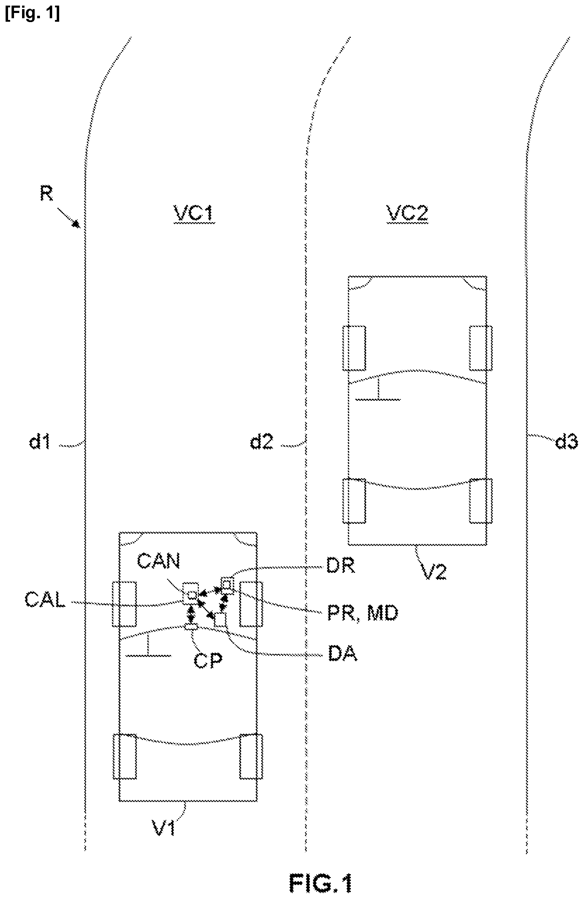

L'invention a notamment pour but de proposer un procédé de régulation de vitesse, et un dispositif de régulation de vitesse DR associé, déstinés à permettre la régulation de la vitesse d'un premier véhicule V1 à conduite au moins partiellement automatisée (ou autonome), au moins en présence d'un virage. Dans ce qui suit, on considère, à titre d'exemple non limitatif, que le premier véhicule V1 à conduite automatisée (ou autonome) est de type automobile. Il s'agit par exemple d'une voiture, comme illustré non limitativement sur la figure 1. Mais l'invention n'est pas limitée à ce type de véhicule. Elle concerne en effet tout type de véhicule terrestre à conduite au moins partiellement automatisée et pouvant circuler sur des voies de circulation terrestres. Ainsi, il pourra aussi s'agir d'un véhicule utilitaire, d'un cyclomoteur, d'une motocyclette, d'un minibus, d'un car, d'un robot de stockage dans un entrepôt, ou d'un engin de voirie, par exemple. D'une manière générale l'invention concerne tout véhicule terrestre susceptible de doubler un autre véhicule terrestre.

On a schématiquement et fonctionnellement représenté sur la figure 1 une route R comportant des première VC1 et seconde VC2 voies de circulation sur lesquelles circulent respectivement des premier V1 et second V2 véhicules. La première voie de circulation VC1 est délimitée (ou encadrée) par deux délimitations d1 et d2, et la seconde voie de circulation VC2 est délimitée (ou encadrée) par deux délimitations d2 et d3. Par ailleurs, sur cette figure 1 le premier véhicule V1 est en train de dépasser (ou doubler) le second véhicule V2.

Le premier véhicule V1 comprend au moins un dispositif de régulation de vitesse DR selon l'invention. Dans l'exemple illustré non limitativement sur la figure 1, le premier véhicule V1 comprend aussi, de façon optionnelle, un capteur CP, des circuits d'analyse CAN et un dispositif d'assistance à la conduite DA sur lesquels on reviendra plus loin.

On notera que pour que l'invention puisse être mise en œuvre il faut que le premier véhicule V1 connaisse à chaque instant le rayon de courbure rc d'au moins la future portion de la première voie de circulation VC1 qu'il s'apprête à emprunter pendant le dépassement. Cette connaissance peut résulter d'une analyse de l'environnement, ou bien d'informations routières définissant chaque portion de la route R empruntée (et notamment son rayon de courbure rc (ou son inverse, à savoir la courbure)), ou encore d'une analyse des coordonnées (par exemple GPS) de la route R.

L'analyse de l'environnement peut, par exemple, résulter de la présence (de façon permanente) dans le premier véhicule V1 d'au moins un capteur CP et de circuits d'analyse CAN, comme illustré non limitativement sur la figure 1. Ce capteur CP peut, par exemple, comprendre au moins une caméra numérique installée dans une partie avant du véhicule (par exemple sur le pare-brise ou sur le rétroviseur intérieur), et chargée d'acquérir des images numériques dans l'environnement qui est au moins situé devant le premier véhicule V1 (ainsi qu'éventuellement sur une partie des deux côtés latéraux de ce dernier (V1)). On notera que le nombre de capteurs CP est ici égal à un (1), mais il peut prendre n'importe quelle valeur supérieure ou égale à un (1) (au moins un capteur sur l'avant), dès lors que cela permet d'acquérir des données dans l'environnement qui est au moins situé devant le premier véhicule V1. Ainsi, le premier véhicule V1 pourrait aussi comprendre au moins un capteur à ultrasons, ou au moins un radar ou lidar, ou encore au moins une autre caméra installée dans une partie arrière et/ou des caméras installées sur ses deux côtés latéraux. Les circuits d'analyse CAN sont agencés de manière à analyser au moins les images numériques, acquises par le capteur CP dans l'environnement situé au moins devant le premier véhicule V1, afin de déterminer des données qui sont représentatives au moins de la première voie de circulation VC1 sur laquelle circule temporairement le premier véhicule V1. Par exemple, ces données d'environnement peuvent définir au moins le rayon de courbure rc (ou la courbure) des portions des deux délimitations d1 et d2 de la première voie de circulation VC1 que le premier véhicule V1 s'apprête à emprunter. On notera que ces données d'environnement peuvent aussi définir le cap du premier véhicule V1, et/ou l'estimée de la dérivée du rayon de courbure rc, et/ou la largeur d'une délimitation, et/ou la distance séparant deux délimitations (ici d1 et d2), et/ou la vitesse d'un véhicule détecté dans le voisinage, et/ou l'accélération d'un véhicule détecté dans le voisinage, par exemple.

Dans l'exemple illustré non limitativement sur la figure 1, les circuits d'analyse CAN font partie d'un calculateur CAL embarqué dans le premier véhicule V1. Mais cela n'est pas obligatoire. En effet, les circuits d'analyse CAN pourraient comprendre leur propre calculateur ou bien pourraient faire partie du capteur CP. Par conséquent, les circuits d'analyse CAN peuvent être réalisés sous la forme d'une combinaison de circuits ou composants électriques ou électroniques (ou « hardware ») et de modules logiciels (ou informatiques ou encore « software »).

En variante, on peut utiliser uniquement au moins une cartographie pour l'environnement et un radar embarqué pour déterminer la vitesse du second véhicule V2 doublé. Dans ce cas, les informations routières (définissant chaque portion de la route R empruntée) peuvent provenir d'une base de données définissant une cartographie routière très précise, et embarquée dans le premier véhicule V1 ou bien accessible par voie d'ondes par ce dernier (V1). On détermine alors précisément la position géographique de la future portion que le premier véhicule V1 s'apprête à emprunter sur la première voie de circulation VC1, par exemple au moyen d'un dispositif d'aide à la navigation embarqué (éventuellement temporairement) dans le premier véhicule V1, puis on détermine dans la base de données le rayon de courbure rc (ou la courbure) qui est associé(e) à cette future portion.

En l'absence de capteur CP mais en présence de coordonnées (par exemple GPS) de la route R, les circuits d'analyse CAN sont agencés de manière à analyser ces coordonnées afin de déterminer les données d'environnement qui définissent au moins le rayon de courbure (ou la courbure) des portions des deux délimitations d1 et d2 de la première voie de circulation VC1 que le premier véhicule V1 s'apprête à emprunter. Ces coordonnées de la route R peuvent, par exemple, être fournies par un dispositif d'aide à la navigation embarqué (éventuellement temporairement) dans le premier véhicule V1.

L'éventuel dispositif d'assistance à la conduite DA est par exemple destiné à contrôler la conduite du premier véhicule V1 (au moins partiellement) de façon automatisée (ou autonome), en fonction des données d'environnement. Ce contrôle est réalisé au moyen de commandes qui sont déterminées pour des organes du premier véhicule V1 impliqués dans les déplacements de ce dernier (V1), comme par exemple le groupe motopropulseur (ou GMP), le système de freinage, et les moyens de changement de vitesse (par exemple une boîte de vitesses automatique).

Le dispositif d'assistance (à la conduite) DA comprend ici son propre calculateur, mais cela n'est pas obligatoire. En effet, le dispositif d'assistance (à la conduite) DA pourrait faire partie d'un calculateur assurant au moins une autre fonction au sein du premier véhicule V1. Par ailleurs, les circuits d'analyse CAN pourraient faire partie du dispositif d'assistance à la conduite DA.

Comme évoqué plus haut, l'invention propose notamment un procédé de régulation de vitesse destiné à permettre la régulation automatisée de la vitesse du premier véhicule V1.

Ce procédé (de régulation de vitesse) peut être au moins partiellement mis en œuvre par le dispositif de régulation (de vitesse) DR qui comprend à cet effet au moins un processeur PR et au moins une mémoire MD. Dans l'exemple illustré non limitativement sur la figure 1, le dispositif de régulation (de vitesse) DR comprend son propre calculateur. Mais cela n'est pas obligatoire. En effet, le dispositif de régulation DR pourrait faire partie d'un calculateur assurant au moins une autre fonction au sein du premier véhicule V1. Ainsi, il pourrait, par exemple, faire partie du dispositif d'assistance à la conduite DA. Par conséquent, le dispositif de régulation DR peut être réalisé sous la forme d'une combinaison de circuits ou composants électriques ou électroniques et de modules logiciels. La mémoire MD est vive afin de stocker des instructions pour la mise en œuvre par le processeur PR du procédé de régulation. Le processeur PR est, par exemple, un processeur de signal numérique (ou DSP (« Digital Signal Processor »)).

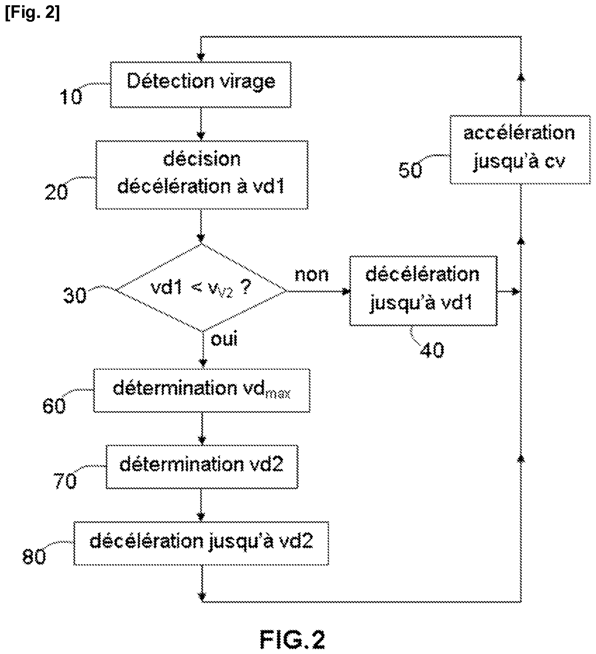

Comme illustré sur la figure 2, le procédé (de régulation de vitesse), selon l'invention, comprend une étape 10-80 pouvant être subdivisée en sous-étapes 10 à 80 et commençant lorsque la fonction de régulation de vitesse (du dispositif de régulation DR) a été activée (par le conducteur du premier véhicule V1 ou l'éventuel dispositif d'assistance à la conduite DA).

Dans une sous-étape 10, on (le processeur PR et la mémoire MD) détecte(nt) que le rayon de courbure rc, de la future portion que le premier véhicule V1 s'apprête à emprunter sur la première voie de circulation VC1 et qui vient d'être communiqué par les circuits d'analyse CAN, est représentatif d'un virage.

Il est important de noter que dans ce qui précède et ce qui suit on entend par « virage » une portion de route dont le rayon de courbure rc nécessite une diminution de vitesse pour améliorer le confort du conducteur et des passagers et aussi permettre au premier véhicule V1 de mieux passer le virage.

La détection de virage peut, par exemple, résulter d'une comparaison de ce rayon de courbure rc à un seuil de rayon de courbure src prédéfini par le processeur PR. On comprendra que lorsque le rayon de courbure rc est inférieur au seuil de rayon de courbure src (soit rc < src), l'étape du procédé prend fin et le processeur PR et la mémoire MD attendent de recevoir le rayon de courbure rc suivant.

Si l'on a rc > src, on (le processeur PR et la mémoire MD) décide(nt) d'imposer au premier véhicule V1 (et plus précisément, ici (et par exemple), au dispositif d'assistance DA), dans une sous-étape 20, une phase de décélération jusqu'à une première vitesse de décélération (ou de passage en virage) vd1 qui est adaptée au rayon de courbure rc.

Puis, dans une sous-étape 30, si le premier véhicule V1 est en train de dépasser un second véhicule V2 circulant sur la seconde voie de circulation VC2, on (le processeur PR et la mémoire MD) détermine(nt) la vitesse en cours v_{V2} de ce second véhicule V2, et compare(nt) la première vitesse de décélération vd1 à cette vitesse en cours v_{V2}.

Comme évoqué précédemment, la vitesse en cours v_{V2} peut être déterminée par les circuits d'analyse CAN à partir des données d'environnement déterminées par le(s) capteur(s) embarqué(s) dans le premier véhicule V1 (et notamment par CP) et/ou transmise au premier véhicule V1 par un véhicule voisin de ce dernier (V1), éventuellement le second véhicule V2, et/ou par l'infrastructure routière, par exemple au moyen de messages de type Car2X ou V2X.

On notera que si le premier véhicule V1 n'est pas engagé dans une phase de dépassement ou si la première vitesse de décélération vd1 est supérieure à la vitesse en cours v_{V2} (soit vd1 > v_{V2}), on (le processeur PR et la mémoire MD) impose(nt) au premier véhicule V1 la phase de décélération jusqu'à la première vitesse de décélération vd1, dans une sous-étape 40. Cette imposition se fait par la génération d'instruction(s) ou de commande(s). Puis, une fois la première vitesse de décélération vd1 atteinte par le premier véhicule V1, on (le processeur PR et la mémoire MD) impose(nt) à ce dernier (V1), dans une sous-étape 50, une phase d'accélération, par exemple jusqu'à obtention d'une vitesse égale à la consigne de vitesse cv (éventuellement adaptée en fonction de la vitesse d'un autre véhicule situé devant le premier véhicule V1). On considère en effet que le virage n'impose plus de contrainte à la vitesse du premier véhicule V1. On comprendra que c'est, ici, le dispositif d'assistance DA qui contrôle l'imposition au premier véhicule V1 de la phase d'accélération. Cette phase d'accélération peut être imposée juste après la phase de décélération, ou bien après avoir laissé passer une durée prédéfinie à la fin de la phase de décélération, ou encore lorsque le rayon de courbure rc de la future portion que s'apprête à emprunter le premier véhicule V1 devient suffisamment élevé pour ne pas nécessiter une nouvelle phase de décélération.

En revanche, si la première vitesse de décélération vd1 est inférieure à la vitesse en cours v_{V2} (soit vd1 < v_{V2}), on (le processeur PR et la mémoire MD) détermine(nt) une seconde vitesse de décélération vd2 qui est supérieure à la vitesse en cours v_{V2} déterminée, dans une sous-étape 70. Puis, on (le processeur PR et la mémoire MD) remplace(nt) la première vitesse de décélération vd1 par la seconde vitesse de décélération vd2, et donc impose(nt) au premier véhicule V1 la phase de décélération jusqu'à cette seconde vitesse de décélération vd2, dans une sous-étape 80. Cette imposition se fait par la génération d'instruction(s) ou de commande(s). Ainsi, la vitesse du premier véhicule V1 demeure dans le virage (en dehors de situations exceptionnelles mentionnées plus loin) supérieure à celle du second véhicule V2 qu'il est en train de dépasser, ce qui permet d'éviter un ralentissement du flux de circulation et de tenter un conducteur d'un véhicule suivant le premier véhicule V1 de dépasser ce dernier (V1) par la seconde voie de circulation VC2 en suivant le second véhicule V2.

Une fois la seconde vitesse de décélération vd2 atteinte par le premier véhicule V1, on (le processeur PR et la mémoire MD) effectue(nt) la sous-étape 50, afin d'imposer une phase d'accélération (par exemple jusqu'à obtention d'une vitesse égale à la consigne de vitesse cv).

On notera que dans l'étape 10-80 du procédé on (le processeur PR et la mémoire MD) peu(ven)t déterminer, dans une sous-étape 60, une vitesse de décélération maximale vdₘₐₓ en fonction d'une première accélération transversale maximale que peut subir le premier véhicule V1 dans le virage, compte tenu de son rayon de courbure rc. Dans ce cas, on (le processeur PR et la mémoire MD) peu(ven)t déterminer une seconde vitesse de décélération vd2 qui est inférieure ou égale à cette vitesse de décélération maximale vdₘₐₓ déterminée, dans la sous-étape 70. On notera qu'il peut arriver dans certaines situations exceptionnelles que la vitesse de décélération maximale vdₘₐₓ déterminée soit inférieure ou égale à la vitesse en cours v_{V2} déterminée, et donc dans ces situations exceptionnelles on peut imposer une seconde vitesse de décélération vd2 inférieure ou égale à la vitesse de décélération maximale vdₘₐₓ déterminée et donc inférieure ou égale à la vitesse en cours v_{V2} déterminée. La première accélération transversale maximale est, par exemple, déterminée par le dispositif d'assistance DA. Mais elle pourrait aussi être déterminée par le dispositif de régulation DR.

Par exemple, dans la sous-étape 60 on (le processeur PR et la mémoire MD) peu(ven)t déterminer la vitesse de décélération maximale vdmax en fonction, en outre, d'une seconde accélération transversale maximale qui respecte un niveau de confort minimal de passager(s) du premier véhicule V1. Cette seconde accélération transversale maximale est a priori strictement inférieure à la première accélération transversale maximale (que peut encaisser le premier véhicule V1 sans risque).

Egalement par exemple, dans la sous-étape 60 on (le processeur PR et la mémoire MD) peu(ven)t déterminer la vitesse de décélération maximale vdₘₐₓ en fonction, en outre, d'au moins un paramètre qui peut être choisi parmi la consigne de vitesse cv (pour la régulation de vitesse du premier véhicule V1), la limitation de vitesse qui est imposée sur la première voie de circulation VC1, la vitesse et/ou l'accélération en cours du second véhicule V2, le nombre de véhicules qui précèdent le second véhicule V2 sur la seconde voie de circulation VC2, la présence d'un autre véhicule suivant le premier véhicule V1 sur la première voie de circulation VC1, et la présence d'un autre véhicule suivi par le premier véhicule V1 ou par le second véhicule V2. Ces différents paramètres (de contexte local) peuvent être déterminés par les circuits d'analyse CAN à partir des données d'environnement déterminées par le(s) capteur(s) embarqué(s) dans le premier véhicule V1 (et notamment par CP), et/ou peuvent être transmis au premier véhicule V1 par un véhicule voisin de ce dernier (V1) et/ou par l'infrastructure routière, par exemple au moyen de messages de type Car2X ou V2X.

On comprendra en effet que le contexte local relatif à la circulation sur la route R est important à prendre en considération. En effet, lors du dépassement il est préférable que le premier véhicule V1 se retrouve placé devant le second véhicule V2 aussi vite que possible pour ne pas empêcher d'autres véhicules de faire de même et ne pas perturber le conducteur du second véhicule V2. De même, plus la densité de trafic est forte, plus il faut respecter la vitesse en cours du flux de circulation (ici sur la première voie de circulation VC1), afin d'éviter des accidents ou la génération de ralentissements tout en respectant le code de la route.

Egalement par exemple, dans la sous-étape 70 on (le processeur PR et la mémoire MD) peu(ven)t déterminer la seconde vitesse de décélération vd2 en fonction, en outre, d'au moins un paramètre qui peut être choisi parmi la consigne de vitesse cv, la limitation de vitesse imposée sur la première voie de circulation VC1, la vitesse et/ou l'accélération en cours du second véhicule V2, le nombre de véhicules précédant le second véhicule V2 sur la seconde voie de circulation VC2, la présence d'un autre véhicule suivant le premier véhicule V1 sur la première voie de circulation VC1, et la présence d'un autre véhicule suivi par le premier véhicule V1 ou par le second véhicule V2.

On notera également que dans la sous-étape 80 on (le processeur PR et la mémoire MD) peu(ven)t ne pas procéder au remplacement de la première vitesse de décélération vd1 par la seconde vitesse de décélération vd2 lorsque les première VC1 et seconde VC2 voies de circulation ont des destinations différentes. On considère en effet que les première VC1 et seconde VC2 voies de circulation vont bientôt ne plus être adjacentes et donc que le premier véhicule V1 n'est pas dans une phase de dépassement du second véhicule V2.

On notera également que la durée de la phase de décélération et la vitesse de décélération vd1 ou vd2 sont préférentiellement déterminées de manière à respecter le confort longitudinal.

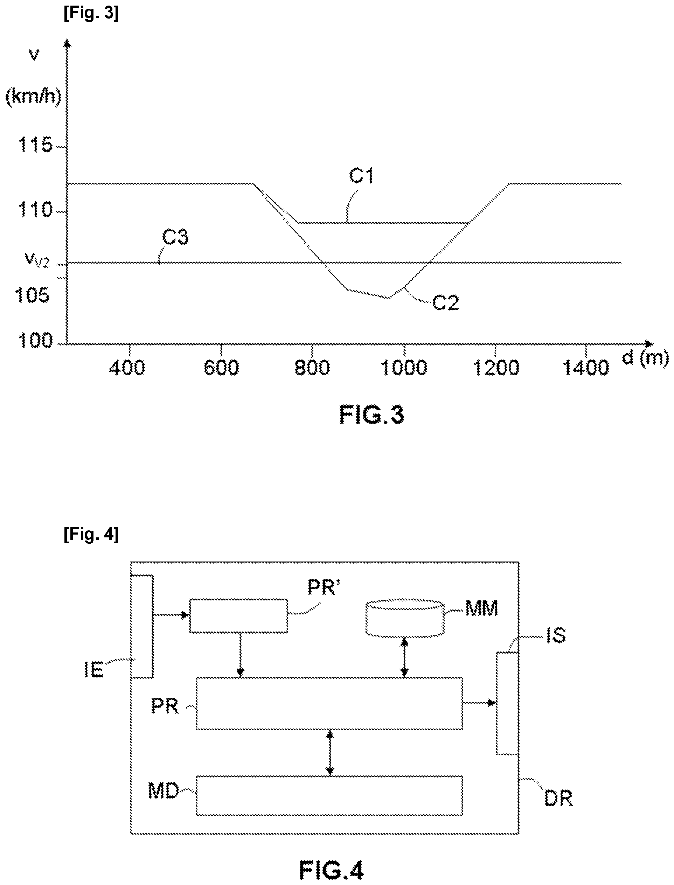

On a schématiquement illustré sur la figure 3 au sein d'un diagramme des première C1, deuxième C2 et troisième C3 courbes d'évolution de la vitesse (en km/h) respectivement du premier véhicule V1, d'un autre véhicule similaire au premier véhicule V1 mais équipé d'un dispositif de régulation de vitesse de l'art antérieur, et du second véhicule V2 pendant une phase de dépassement en virage de ce dernier (V2) par le premier véhicule V1 et cet autre véhicule, en fonction de la distance.

On considère ici (courbe C3) que le second véhicule V2 a une vitesse en cours v_{V2} constante d'environ 107 km/h avant, dans et après le virage. Avec un dispositif de régulation de vitesse de l'art antérieur (courbe C2), en arrivant dans le virage l'autre véhicule fait l'objet d'une phase de décélération jusqu'à une première vitesse de décélération vd1 égale à environ 103 km/h, puis d'une phase d'accélération jusqu'à ce qu'il retrouve une vitesse égale à sa consigne de vitesse cv (ici égale à environ 112 km/h). Par conséquent, cet autre véhicule se retrouve dans le virage avec une vitesse minimale vd1 qui est inférieure à la vitesse constante v_{V2} du second véhicule V2, ce qui peut être pénalisant pour le trafic, voire potentiellement dangereux. En revanche (courbe C1), en arrivant dans le virage le premier véhicule V1 fait l'objet d'une phase de décélération jusqu'à une seconde vitesse de décélération vd2 égale à environ 109 km/h (et donc supérieure à v_{V2}), puis d'une phase d'accélération jusqu'à ce qu'il retrouve une vitesse égale à sa consigne de vitesse cv (ici égale à environ 112 km/h). Par conséquent, le premier véhicule V1 a en permanence dans le virage une vitesse qui est supérieure à la vitesse constante v_{V2} du second véhicule V2, et donc ne risque pas de pénaliser le trafic ou d'être potentiellement dangereux.

On notera que l'invention propose aussi un produit programme d'ordinateur comprenant un jeu d'instructions qui, lorsqu'il est exécuté par des moyens de traitement de type circuits électroniques (ou hardware), comme par exemple le calculateur CA, est propre à mettre en œuvre le procédé de régulation de vitesse décrit ci-avant pour réguler la vitesse du premier véhicule V1, notamment lorsqu'il s'apprête à circuler dans un virage.

On notera également que sur la figure 4 le dispositif de régulation DR est très schématiquement illustré avec seulement sa mémoire vive MD et son processeur PR qui peut comprendre des circuits intégrés (ou imprimés), ou bien plusieurs circuits intégrés (ou imprimés) reliés par des connections filaires ou non filaires. On entend par circuit intégré (ou imprimé) tout type de dispositif apte à effectuer au moins une opération électrique ou électronique. Mais, comme illustré non limitativement sur la figure 4, le dispositif de régulation DR peut aussi comprendre une mémoire de masse MM, notamment pour le stockage des données d'environnement acquises et d'éventuelles données intermédiaires intervenant dans tous ses calculs et traitements. Par ailleurs, ce dispositif de régulation DR peut aussi comprendre une interface d'entrée IE pour la réception d'au moins les données d'environnement acquises, et éventuellement des données de position du premier véhicule V1 (fournies par un dispositif d'aide à la navigation présent dans ce dernier (V1) de façon permanente ou de façon temporaire (lorsqu'il fait partie d'un équipement portable ou d'un téléphone mobile intelligent (ou smartphone ») ou d'une tablette accompagnant un passager)), pour les utiliser dans des calculs ou traitements, éventuellement après les avoir mises en forme et/ou démodulées et/ou amplifiées, de façon connue en soi, au moyen d'un processeur de signal numérique PR'. De plus, ce dispositif de régulation DR peut aussi comprendre une interface de sortie IS, notamment pour la transmission des première vd1 et seconde vitesses de décélération qu'il détermine.

Une ou plusieurs sous-étapes de l'étape du procédé de régulation de vitesse peuvent être effectuées par des composants différents. Ainsi, le procédé de régulation de vitesse peut-être mis en œuvre par une pluralité de processeurs, mémoire vive, mémoire de masse, interface d'entrée, interface de sortie et/ou processeur de signal numérique. Dans ces situations, le dispositif de régulation DR peut-être décentralisé, au sein d'un réseau local (plusieurs processeurs reliés entre eux par exemple) ou d'un réseau étendu.

## Revendications

1. Procédé de régulation de la vitesse d'un premier véhicule (V1) à conduite au moins partiellement automatisée et comprenant des moyens configurés pour déterminer le rayon de courbure d'une future portion qu'il s'apprête à emprunter sur une première voie de circulation (VC1) sur laquelle il circule et adjacente à une seconde voie de circulation (VC2), ledit procédé comprenant une étape (10-80) dans laquelle, en cas de détection d'un rayon de courbure de ladite future portion représentatif d'un virage, on impose audit premier véhicule (V1) une phase de décélération jusqu'à une première vitesse de décélération adaptée audit rayon de courbure, **caractérisé en ce que** dans ladite étape (10-80), lorsque ledit premier véhicule (V1) est en train de dépasser un second véhicule (V2) circulant sur ladite seconde voie de circulation (VC2), on détermine une vitesse en cours dudit second véhicule (V2), puis, si ladite première vitesse de décélération est inférieure à cette vitesse en cours déterminée, on remplace ladite première vitesse de décélération par une seconde vitesse de décélération supérieure à ladite vitesse en cours déterminée.

2. Procédé selon la revendication 1, **caractérisé en ce que** dans ladite étape (10-80) on détermine une vitesse de décélération maximale en fonction d'une première accélération transversale maximale que peut subir ledit premier véhicule (V1) dans ledit virage compte tenu de son rayon de courbure, et on détermine ladite seconde vitesse de décélération inférieure ou égale à ladite vitesse de décélération maximale déterminée.

3. Procédé selon la revendication 2, **caractérisé en ce que** dans ladite étape (10-80) lorsque ladite vitesse de décélération maximale déterminée est inférieure ou égale à ladite vitesse en cours du second véhicule (V2), on impose ladite seconde vitesse de décélération inférieure ou égale à ladite vitesse de décélération maximale déterminée.

4. Procédé selon la revendication 2 ou 3, **caractérisé en ce que** dans ladite étape (10-80) on détermine ladite vitesse de décélération maximale en fonction, en outre, d'une seconde accélération transversale maximale respectant un niveau de confort minimal de passager(s) dudit premier véhicule (V1).

5. Procédé selon l'une des revendications 2 à 4, **caractérisé en ce que** dans ladite étape (10-80) on détermine ladite vitesse de décélération maximale en fonction, en outre, d'au moins un paramètre choisi parmi une consigne de vitesse pour la régulation de vitesse dudit premier véhicule (V1), d'une limitation de vitesse imposée sur ladite première voie de circulation (VC1), d'une vitesse et/ou d'une accélération en cours dudit second véhicule (V2), d'un nombre de véhicules précédant ledit second véhicule (V2) sur ladite seconde voie de circulation (VC2), d'une présence d'un autre véhicule suivant ledit premier véhicule (V1) sur ladite première voie de circulation (VC1), et d'une présence d'un autre véhicule suivi par ledit premier véhicule (V1) ou par ledit second véhicule (V2).

6. Procédé selon l'une des revendications 1 à 5, **caractérisé en ce que** dans ladite étape (10-80) on détermine ladite seconde vitesse de décélération en fonction, en outre, d'au moins un paramètre choisi parmi une consigne de vitesse pour la régulation de vitesse dudit premier véhicule (V1), d'une limitation de vitesse imposée sur ladite première voie de circulation (VC1), d'une vitesse et/ou d'une accélération en cours dudit second véhicule (V2), d'un nombre de véhicules précédant ledit second véhicule (V2) sur ladite seconde voie de circulation (VC2), d'une présence d'un autre véhicule suivant ledit premier véhicule (V1) sur ladite première voie de circulation (VC1), et d'une présence d'un autre véhicule suivi par ledit premier véhicule (V1) ou par ledit second véhicule (V2).

7. Procédé selon l'une des revendications 1 à 6, **caractérisé en ce que** dans ladite étape (10-80) on ne procède pas audit remplacement de ladite première vitesse de décélération par ladite seconde vitesse de décélération lorsque lesdites première (VC1) et seconde (VC2) voies de circulation ont des destinations différentes.

8. Produit programme d'ordinateur comprenant un jeu d'instructions qui, lorsqu'il est exécuté par des moyens de traitement, met en œuvre le procédé de régulation de vitesse selon l'une des revendications précédentes pour réguler la vitesse d'un véhicule (V1) à conduite au moins partiellement automatisée et connaissant le rayon de courbure d'une future portion qu'il s'apprête à emprunter sur première voie de circulation (VC1) sur laquelle il circule et adjacente à une seconde voie de circulation (VC2).

9. Dispositif de régulation de vitesse (DR) pour un premier véhicule (V1) à conduite au moins partiellement automatisée et comprenant des moyens configurés pour déterminer le rayon de courbure d'une future portion qu'il s'apprête à emprunter sur une première voie de circulation (VC1) sur laquelle il circule et adjacente à une seconde voie de circulation (VC2), ledit dispositif (DR) comprenant au moins un processeur (PR) et au moins une mémoire (MD) agencés pour effectuer, en cas de détection d'un rayon de courbure de ladite future portion représentatif d'un virage, les opérations consistant à imposer audit premier véhicule (V1) une phase de décélération jusqu'à une première vitesse de décélération adaptée audit rayon de courbure, **caractérisé en ce que**, lorsque ledit premier véhicule (V1) est en train de dépasser un second véhicule (V2) circulant sur ladite seconde voie de circulation (VC2), ledit processeur (PR) et ladite mémoire (MD) sont agencés pour effectuer des opérations consistant à déterminer une vitesse en cours dudit second véhicule (V2), puis, si ladite première vitesse de décélération est inférieure à cette vitesse en cours déterminée, à remplacer ladite première vitesse de décélération par une seconde vitesse de décélération supérieure à ladite vitesse en cours déterminée.

10. Véhicule (V1) à conduite au moins partiellement automatisée et comprenant des moyens configurés pour déterminer le rayon de courbure d'une future portion qu'il s'apprête à emprunter sur une première voie de circulation (VC1) sur laquelle il circule et adjacente à une seconde voie de circulation (VC2), **caractérisé en ce qu'**il comprend un dispositif de régulation de vitesse (DR) selon la revendication 9.

## Patentansprüche

1. Verfahren zur Regelung der Geschwindigkeit eines ersten Fahrzeugs (V1) mit zumindest teilweise automatisiertem Fahren und mit Mitteln, die so konfiguriert sind, dass sie den Krümmungsradius eines künftigen Abschnitts bestimmen, den es auf einer ersten Fahrspur (VC1), auf der es fährt und die an eine zweite Fahrspur (VC2) angrenzt, zu befahren beabsichtigt, wobei das Verfahren einen Schritt (10-80) umfasst, in dem bei Erfassung eines Krümmungsradius des künftigen Abschnitts, der eine Kurve darstellt, dem ersten Fahrzeug (V1) eine Verzögerungsphase bis zu einer ersten Verzögerungsgeschwindigkeit auferlegt wird, die an den Kurvenradius angepasst ist, **dadurch gekennzeichnet, dass** in dem Schritt (10-80), wenn das erste Fahrzeug (V1) dabei ist, ein zweites Fahrzeug (V2) zu überholen, das auf der zweiten Fahrspur (VC2) fährt, eine aktuelle Geschwindigkeit des zweiten Fahrzeugs (V2) bestimmt wird, und dann, wenn die erste Verzögerungsgeschwindigkeit niedriger als diese bestimmte aktuelle Geschwindigkeit ist, die erste Verzögerungsgeschwindigkeit durch eine zweite Verzögerungsgeschwindigkeit ersetzt wird, die höher als die bestimmte aktuelle Geschwindigkeit ist.

2. Verfahren nach Anspruch 1, **dadurch gekennzeichnet, dass** in dem Schritt (10-80) eine maximale Verzögerungsgeschwindigkeit in Abhängigkeit von einer ersten maximalen Querbeschleunigung bestimmt wird, die das erste Fahrzeug (V1) in der Kurve unter Berücksichtigung ihres Krümmungsradius erfahren kann, und die zweite Verzögerungsgeschwindigkeit bestimmt wird, die kleiner als die bestimmte maximale Verzögerungsgeschwindigkeit oder gleich dieser ist.

3. Verfahren nach Anspruch 2, **dadurch gekennzeichnet, dass** in dem Schritt (10-80), wenn die bestimmte maximale Verzögerungsgeschwindigkeit kleiner oder gleich der aktuellen Geschwindigkeit des zweiten Fahrzeugs (V2) ist, die zweite Verzögerungsgeschwindigkeit vorgeschrieben wird, die kleiner oder gleich der bestimmten maximalen Verzögerungsgeschwindigkeit ist.

4. Verfahren nach Anspruch 2 oder 3, **dadurch gekennzeichnet, dass** in dem Schritt (10-80) die maximale Verzögerungsgeschwindigkeit zusätzlich in Abhängigkeit von einer zweiten maximalen Querbeschleunigung bestimmt wird, die ein minimales Komfortniveau für den/die Fahrgast(e) des ersten Fahrzeugs (V1) respektiert.

5. Verfahren nach einem der Ansprüche 2 bis 4, **dadurch gekennzeichnet, dass** in dem Schritt (10-80) die maximale Verzögerungsgeschwindigkeit zusätzlich in Abhängigkeit von mindestens einem Parameter bestimmt wird, der aus einem Geschwindigkeitssollwert für die Geschwindigkeitsregelung des ersten Fahrzeugs (V1), einer auf der ersten Fahrspur (VC1) auferlegten Geschwindigkeitsbeschränkung, einer aktuellen Geschwindigkeit und/oder Beschleunigung des zweiten Fahrzeugs (V2), einer Anzahl von Fahrzeugen vor dem zweiten Fahrzeug (V2) auf der zweiten Fahrspur (VC2), einer Anwesenheit eines anderen Fahrzeugs, das dem ersten Fahrzeug (V1) auf der ersten Fahrspur (VC1) folgt, und einer Anwesenheit eines anderen Fahrzeugs, das von dem ersten Fahrzeug (V1) oder dem zweiten Fahrzeug (V2) verfolgt wird.

6. Verfahren nach einem der Ansprüche 1 bis 5, **dadurch gekennzeichnet, dass** in dem Schritt (10-80) die zweite Verzögerungsgeschwindigkeit zusätzlich in Abhängigkeit von mindestens einem Parameter bestimmt wird, der aus einem Geschwindigkeitssollwert für die Geschwindigkeitsregelung des ersten Fahrzeugs (V1), einer auf der ersten Fahrspur (VC1) auferlegten Geschwindigkeitsbegrenzung, einer aktuellen Geschwindigkeit und/oder Beschleunigung des zweiten Fahrzeugs (V2), einer Anzahl von Fahrzeugen vor dem zweiten Fahrzeug (V2) auf der zweiten Fahrspur (VC2), einer Anwesenheit eines anderen Fahrzeugs, das dem ersten Fahrzeug (V1) auf der ersten Fahrspur (VC1) folgt, und einer Anwesenheit eines anderen Fahrzeugs, das von dem ersten Fahrzeug (V1) oder dem zweiten Fahrzeug (V2) verfolgt wird.

7. Verfahren nach einem der Ansprüche 1 bis 6, **dadurch gekennzeichnet, dass** in dem Schritt (10-80) das Ersetzen der ersten Verzögerungsgeschwindigkeit durch die zweite Verzögerungsgeschwindigkeit nicht durchgeführt wird, wenn die erste (VC1) und die zweite (VC2) Fahrspur unterschiedliche Ziele haben.

8. Computerprogrammprodukt mit einem Befehlssatz, der, wenn er von Verarbeitungsmitteln ausgeführt wird, das Geschwindigkeitsregelungsverfahren nach einem der vorhergehenden Ansprüche implementiert, um die Geschwindigkeit eines Fahrzeugs (V1) zu regeln, das zumindest teilweise automatisiert fährt und den Krümmungsradius eines zukünftigen Abschnitts kennt, den es auf einer ersten Fahrspur (VC1), auf der es fährt und die an eine zweite Fahrspur (VC2) angrenzt, zu befahren beabsichtigt.

9. Vorrichtung zur Geschwindigkeitsregelung (DR) für ein erstes Fahrzeug (V1), das zumindest teilweise automatisiert fährt und Mittel umfasst, die so konfiguriert sind, dass sie den Krümmungsradius eines zukünftigen Abschnitts bestimmen, den es auf einer ersten Fahrspur (VC1), auf der es fährt, und angrenzend an eine zweite Fahrspur (VC2) zu befahren beabsichtigt, wobei die Vorrichtung (DR) mindestens einen Prozessor (PR) und mindestens einen Speicher (MD) umfasst, die so angeordnet sind, dass sie im Fall der Erfassung eines Kurvenradius des zukünftigen Abschnitts, der eine Kurve darstellt, die Operationen durchführen, die darin bestehen, dem ersten Fahrzeug (V1) eine Verzögerungsphase bis zu einer ersten Verzögerungsgeschwindigkeit aufzuzwingen, die an den Kurvenradius angepasst ist, **dadurch gekennzeichnet, dass**, wenn das erste Fahrzeug (V1) dabei ist, ein zweites Fahrzeug (V2) zu überholen, das auf der zweiten Fahrspur (VC2) fährt, der Prozessor (PR) und der Speicher (MD) so angeordnet sind, dass sie Operationen durchführen, die darin bestehen, eine aktuelle Geschwindigkeit des zweiten Fahrzeugs (V2) zu bestimmen und dann, wenn die erste Verzögerungsgeschwindigkeit niedriger als diese bestimmte aktuelle Geschwindigkeit ist, die erste Verzögerungsgeschwindigkeit durch eine zweite Verzögerungsgeschwindigkeit zu ersetzen, die höher als die bestimmte aktuelle Geschwindigkeit ist.

10. Fahrzeug (V1), das zumindest teilweise automatisiert fährt und Mittel umfasst, die so konfiguriert sind, dass sie den Krümmungsradius eines zukünftigen Abschnitts bestimmen, den es auf einer ersten Fahrspur (VC1), auf der es fährt und die an eine zweite Fahrspur (VC2) angrenzt, zu befahren beabsichtigt, **dadurch gekennzeichnet, dass** es eine Vorrichtung zur Geschwindigkeitsregelung (DR) nach Anspruch 9 umfasst.

## Claims

1. Method for regulating the speed of a first vehicle (V1) with at least partially automated driving and comprising means configured to determine the radius of curvature of a future portion that it is about to take on a first traffic lane (VC1) on which it is travelling and adjacent to a second traffic lane (VC2), said method comprising a step (10-80) in which, in the event of detection of a radius of curvature of said future portion representative of a bend said first vehicle (V1) is imposed a deceleration phase up to a first deceleration speed adapted to said radius of curvature, **characterized in that** in said step (10-80), when said first vehicle (V1) is overtaking a second vehicle (V2) travelling on said second traffic lane (VC2) a current speed of said second vehicle (V2) is determined, and then, if said first deceleration speed is lower than this determined current speed, said first deceleration speed is replaced with a second deceleration speed higher than said determined current speed.

2. Method according to claim 1, **characterized in that** in the said step (10-80) a maximum deceleration speed is determined as a function of a first maximum transverse acceleration which the said first vehicle (V1) can undergo in the said bend, taking account of its radius of curvature, and the said second deceleration speed is determined to be less than or equal to the said determined maximum deceleration speed.

3. Method according to claim 2, **characterized in that** in said step (10-80) when said determined maximum deceleration speed is less than or equal to said current speed of the second vehicle (V2), said second deceleration speed is imposed less than or equal to said determined maximum deceleration speed.

4. Method according to claim 2 or 3, **characterised in that** in said step (10-80) said maximum deceleration speed is determined as a function, in addition, of a second maximum transverse acceleration respecting a minimum comfort level of passenger(s) of said first vehicle (V1).

5. Method according to one of claims 2 to 4, **characterized in that** in said step (10-80) said maximum deceleration speed is determined as a function, in addition, of at least one parameter chosen from among a speed set point for the speed control of said first vehicle (V1), a speed limit imposed on said first traffic lane (VC1) a current speed and/or acceleration of said second vehicle (V2), a number of vehicles preceding said second vehicle (V2) on said second traffic lane (VC2), a presence of another vehicle following said first vehicle (V1) on said first traffic lane (VC1), and a presence of another vehicle followed by said first vehicle (V1) or by said second vehicle (V2)

6. Method according to one of claims 1 to 5, **characterised in that** in the said step (10-80) the said second deceleration speed is determined as a function, in addition, of at least one parameter chosen from among a speed set point for the speed regulation of the said first vehicle (V1), a speed limit imposed on the said first traffic lane (VC1), a current speed and/or acceleration of said second vehicle (V2), a number of vehicles preceding said second vehicle (V2) on said second traffic lane (VC2), a presence of another vehicle following said first vehicle (V1) on said first traffic lane (VC1), and a presence of another vehicle followed by said first vehicle (V1) or by said second vehicle (V2)

7. Method according to one of claims 1 to 6, **characterized in that** in said step (10-80) said replacement of said first deceleration speed by said second deceleration speed is not performed when said first (VC1) and second (VC2) traffic lanes have different destinations.

8. A computer program product comprising a set of instructions which, when executed by processing means, implements the speed control method according to any of the preceding claims to control the speed of a vehicle (V1) with at least partially automated driving and knowing the radius of curvature of a future portion it is about to travel on a first traffic lane (VC1) on which it is travelling and adjacent to a second traffic lane (VC2).

9. Speed control device (DR) for a first vehicle (V1) with at least partially automated driving and comprising means configured to determine the radius of curvature of a future portion which it is about to take on a first traffic lane (VC1) on which it is travelling and adjacent to a second traffic lane (VC2), said device (DR) comprising at least one processor (PR) and at least one memory (MD) arranged to carry out, in the event of detection of a radius of curvature of said future portion representative of a bend, the operations consisting in imposing on said first vehicle (V1) a phase of deceleration up to a first deceleration speed adapted to said radius of curvature **characterised in that**, when said first vehicle (V1) is overtaking a second vehicle (V2) travelling on said second traffic lane (VC2), said processor (PR) and said memory (MD) are arranged to perform operations of determining a current speed of said second vehicle (V2) and then, if said first deceleration speed is lower than this determined current speed, replacing said first deceleration speed by a second deceleration speed higher than said determined current speed.

10. Vehicle (V1) with at least partially automated driving and comprising means configured to determine the radius of curvature of a future portion it is about to take on a first traffic lane (VC1) on which it is travelling and adjacent to a second traffic lane (VC2), **characterised in that** it comprises a speed regulation device (DR) according to claim 9.
